# EUROPÄISCHE PATENTSCHRIFT

(11) **EP 2 795 262 B1**
(45) Veröffentlichungstag und Bekanntmachung des Hinweises auf die Patenterteilung: **15.01.2020**
(21) Anmeldenummer: 12798226.2
(22) Anmeldetag: 22.11.2012
(51) Int. Cl.: G01F 1/68, G01F 1/696, G01K 7/20

(54) **VERFAHREN ZUR ERKENNUNG EINES TRÖPFCHENNIEDERSCHLAGS AN EINEM BEHEIZTEN TEMPERATURFÜHLER**
METHOD FOR DETECTING DROPLET PRECIPITATION ON A HEATED TEMPERATURE PROBE
PROCÉDÉ POUR LA DÉTECTION D'UNE PRÉCIPITATION DE GOUTTELETTES SUR UN CAPTEUR CHAUFFÉ DE TEMPÉRATURE

(30) Priorität: 22.12.2011 DE 102011089598; 22.12.2011 DE 102011089600
(43) Veröffentlichungstag der Anmeldung: 29.10.2014
(73) Patentinhaber: Endress+Hauser Flowtec AG, 4153 Reinach (BL) (CH)
(72) Erfinder: CHRISTODOULOU, Fanos, 2322 Lakatameia (CY); PFAU, Axel, CH-4147 Aesch (CH); ARNOLD, Martin, 4153 Reinach (CH); WAGNER, Michel, CH-4127 Birsfelden (CH)
(74) Vertreter: Andres, Angelika Maria
(86) Internationale Anmeldenummer: PCT/EP2012/073362
(87) Internationale Veröffentlichungsnummer: WO 2013/092103

(56) Entgegenhaltungen:
- DE-A1-102008 043 887
- US-A- 5 495 720
- US-A1- 2006 235 629
- AL-DEEN M F N ET AL: "A comparative study of single normal, X type and split-film anemometer probe measurements in kerosene/water two-phase flow", MEASUREMENT SCIENCE AND TECHNOLOGY, IOP, BRISTOL, GB, Bd. 8, Nr. 8, 1. August 1997 (1997-08-01), Seiten 885-893, XP020064300, ISSN: 0957-0233, DOI: 10.1088/0957-0233/8/8/009

## Beschreibung

Die vorliegende Erfindung betrifft ein Verfahren zur Erkennung eines Tröpfchenniederschlags an einem beheizten Temperaturfühler an einem beheizten Temperaturfühler eines thermischen Durchflussmessgeräts zur Messung des Durchflusses eines Fluids.

Herkömmliche thermische Durchflussmessgeräte verwenden üblicherweise zwei möglichst gleichartig ausgestaltete Temperatursensoren, die in, meist stiftförmigen, Metallhülsen, so genannten Stingers, angeordnet sind und die in thermischem Kontakt mit dem durch ein Messrohr oder durch die Rohrleitung strömenden Medium sind. Für die industrielle Anwendung sind beide Temperatursensoren üblicherweise in ein Messrohr eingebaut; die Temperatursensoren können aber auch direkt in der Rohrleitung montiert sein. Einer der beiden Temperatursensoren ist ein so genannter aktiver Temperatursensor, der mittels einer Heizeinheit beheizt wird. Als Heizeinheit ist entweder eine zusätzliche Widerstandsheizung vorgesehen, oder bei dem Temperatursensor selbst handelt es sich um ein Widerstandselement, z.B. um einen RTD-(Resistance Temperature Device) Sensor, der durch Umsetzung einer elektrischen Leistung, z.B. durch eine entsprechende Variation des Messstroms erwärmt wird. Bei dem zweiten Temperatursensor handelt es sich um einen sog. passiven Temperatursensor: Er misst die Temperatur des Mediums.

Bisher wurden hauptsächlich RTD-Elemente mit wendelförmig gewickelten Platindrähten in thermischen Durchflussmessgeräten eingesetzt. Bei Dünnfilm-Widerstandsthermometern (TFRTDs) wird herkömmlicherweise eine mäanderförmige Platinschicht auf ein Substrat aufgedampft. Darüber wird eine weitere Glasschicht zum Schutz der Platinschicht aufgebracht. Der Querschnitt der Dünnfilm-Widerstandsthermometern ist im Unterschied zu den, einen runden Querschnitt aufweisenden RTD-Elementen, rechteckig. Die Wärmeübertragung in das Widerstandselement und/oder aus dem Widerstandselement erfolgt demnach über zwei gegenüberliegende Oberflächen, welche zusammen einen Großteil der Gesamtoberfläche eines Dünnfilm-Widerstandsthermometers ausmachen.

Üblicherweise wird in einem thermischen Durchflussmessgerät der beheizbare Temperatursensor so beheizt, dass sich eine feste Temperaturdifferenz zwischen den beiden Temperatursensoren einstellt. Alternativ ist es auch bekannt geworden, über eine Regel-/Steuereinheit eine konstante Heizleistung einzuspeisen.

Tritt in dem Messrohr kein Durchfluss auf, so wird eine zeitlich konstante Wärmemenge zur Aufrechterhaltung der vorgegebenen Temperaturdifferenz benötigt. Ist hingegen das zu messende Medium in Bewegung, ist die Abkühlung des beheizten Temperatursensors wesentlich von dem Massedurchfluss des vorbeiströmenden Mediums abhängig. Da das Medium kälter ist als der beheizte Temperatursensor, wird durch das vorbeiströmende Medium Wärme von dem beheizten Temperatursensor abtransportiert. Um also bei einem strömenden Medium die feste Temperaturdifferenz zwischen den beiden Temperatursensoren aufrecht zu erhalten, ist eine erhöhte Heizleistung für den beheizten Temperatursensor erforderlich. Die erhöhte Heizleistung ist ein Maß für den Massedurchfluss bzw. den Massestrom des Mediums durch die Rohrleitung.

Wird hingegen eine konstante Heizleistung eingespeist, so verringert sich infolge des Durchflusses des Mediums die Temperaturdifferenz zwischen den beiden Temperatursensoren. Die jeweilige Temperaturdifferenz ist dann ein Maß für den Massedurchfluss des Mediums durch die Rohrleitung bzw. durch das Messrohr.

Es besteht somit ein funktionaler Zusammenhang zwischen der zum Beheizen des Temperatursensors notwendigen Heizenergie und dem Massedurchfluss durch eine Rohrleitung bzw. durch ein Messrohr. Die Abhängigkeit des Wärmeübertragungskoeffizienten von dem Massedurchfluss des Mediums durch das Messrohr bzw. durch die Rohrleitung wird in thermischen Durchflussmessgeräten zur Bestimmung des Massedurchflusses genutzt. Geräte, die auf diesem Prinzip beruhen, werden von der Anmelderin unter der Bezeichnung ,t-trend' oder 't-mass' angeboten und vertrieben.

Die DE 10 2008 043 887 A1 beschreibt ein Verfahren zur Detektion von Tröpfchen, welche sich in einer Gasumgebung an einem der Temperatursensoren eines thermischen Durchflussmessgeräts niederschlagen.

Die US2006/2356629 A1 offenbart ein Verfahren zur Überwachung eines Durchflusses. Dabei werden Daten einer vorangegangenen Messung auf einen Speicher in einer Art Logbuch-Funktion abgelegt.

Die Aufgabe der Erfindung besteht darin, sich auf einem beheizten Temperatursensor niederschlagende Tröpfchen zu detektieren.

Die Aufgabe wird gelöst durch den Gegenstand des unabhängigen Anspruchs 1. Weiterbildungen und Ausgestaltungen der Erfindung finden sich in den Merkmalen der jeweils abhängigen Ansprüche wieder.

Vorteile der Erfindung sind, dass der Betreiber einer Anlage gewarnt wird, dass eine zweiphasige Strömung vorliegt und dadurch einerseits der ermittelte Durchfluss nicht korrekt wiedergegeben wird und andererseits mechanische Komponenten stromabwärts angeordneter Maschinen, wie z.B. die Schaufeln einer Turbine, schaden nehmen könnten.

Ein thermisches Durchflussmessgerät, insbesondere nach dem Anemometerprinzip arbeitend, umfasst zumindest einen beheizten Temperaturfühler, insbesondere einen Widerstandsthermometer. Daneben kann es einen unbeheizten Temperaturfühler ausweisen, wobei die Temperaturfühler mit einem Fluid in Kontakt stehen.

Erfindungsgemäß wird zur Erkennung eines Tröpfchenniederschlags bzw. zur Erkennung einer Tröpfchenbildung an einem beheizten Temperaturfühler eines thermischen Durchflussmessgeräts zur Messung des Durchflusses, insbesondere des Massedurchflusses eines Fluids, zunächst der größte Wert eines Maßes für einen Wärmeübertrag vom beheizten Temperaturfühlers auf das Fluid in einem ersten Zeitfenster vorgegebener Länge ermittelt. Anschließend wird geprüft, ob je ein Wert des Maßes für den Wärmeübertrag im ersten Zeitfenster vor und nach dem größten Wert des Maßes für den Wärmeübertrag vorliegt, welcher kleiner ist als die Differenz aus größtem Wert und einem Δ₁ vorgegebener Größe. Das Ergebnis der Prüfung wird zur Erkennung des Tröpfchenniederschlags verwendet.

In einer bevorzugten Ausführungsvariante wird weiterhin zur Erkennung eines Tröpfchenniederschlags bzw. zur Erkennung einer Tröpfchenbildung an einem beheizten Temperaturfühler eines thermischen Durchflussmessgeräts zur Messung des Durchflusses, insbesondere des Massedurchflusses eines Fluids, zunächst ein Maß für die vom beheizten Temperaturfühler auf das Fluid übertragene Wärme auf das Vorliegen einer Periodizität in einem vorgegebenen Intervall untersucht. Das Ergebnis dieser Untersuchung, also die Information ob eine Periodizität im vorgegebenen Intervall vorliegt, wird anschließend zur Erkennung des Tröpfchenniederschlags verwendet. Gegebenenfalls werden weitere Informationen ausgewertet, wie z.B. welche Periode die im vorgegebenen Intervall vorliegende Periodizität aufweist.

Wärme kann auf verschiedene Arten übertragen werden, z.B. mittels Konvektion und Wärmestrahlung. Dabei wird ein Wärmestrom an einer Grenzfläche zwischen beheiztem Temperaturfühler und Fluid übertragen. Der Wärmestrom verläuft dabei vornehmlich vom beheizten Temperaturfühler auf das Fluid. Jedoch kann auch Wärme vom Fluid auf den beheizten Temperaturfühler übertragen werden, z.B. durch die durch Kondensation von gasförmigen Fluid an der Grenzfläche zwischen beheiztem Temperaturfühler und Fluid entstehende Wärme.

Im Unterschied zur DE 10 2008 043 887 A1 geht es weniger darum, im Bereich der Phasengrenzen des Fluids Tröpfchen zu detektieren, welche sich durch Kondensation am beheizten Temperaturfühler niederschlagen, als vielmehr Tröpfchen in einer feuchten Gasströmung, insbesondere in Biogas zu entdecken. So wird in einer Ausgestaltung der Erfindung der beheizte Temperaturfühler des thermischen Durchflussmessgeräts in einer gasförmigen Strömung mit einer relativen Feuchte von mindestens 80% verwendet. Gemäß einer Ausführungsform der Erfindung werden Tröpfchen in einer ansonsten gasförmigen Strömung mit einer relativen Feuchte von 100% oder gar in einer übersättigten Strömung detektiert.

Ein Maß für den Wärmeübergang ist beispielsweise die Heizleistung zum Beheizen des beheizten Temperaturfühlers, wenn zwischen beheiztem Temperaturfühler und unbeheiztem Temperaturfühler des thermischen Durchflussmessgeräts eine vorgegebene Temperaturdifferenz eingestellt wird. Wird jedoch die Heizleistung zum Beheizen des beheizten Temperaturfühlers konstant gehalten, ist die Temperaturdifferenz beheiztem Temperaturfühler und unbeheiztem Temperaturfühler des thermischen Durchflussmessgeräts ein Maß für den Wärmeübergang. Natürlich existieren auch Mischformen, wie den so genannten Power Coefficient. Dieser wird beispielsweise nach der Formel PC(tₒ)= P(t₀)/(T_{Beheizt}(t₀)-T_{Medium}(t₀)) zu einem Zeitpunkt tₒ berechnet, wobei PC für den Power Coefficient steht, P die Heizleistung wiedergibt und T_{Beheizt} die Temperatur des beheizten und T_{Medium} die Temperatur des unbeheizten Temperaturfühlers des thermischen Durchflussmessgeräts sind.

Gemäß einer ersten Weiterbildung der Erfindung wird zur Erkennung eines Tröpfchenniederschlags an einem beheizten Temperaturfühler eines thermischen Durchflussmessgeräts der größte Wert der Heizleistung zum Beheizen des beheizten Temperaturfühlers in einem ersten Zeitfenster vorgegebener Länge ermittelt. Beispielsweise wird dazu eine Kurve des Heizleistungssignals über der Zeit aufgetragen und das globale Maximum x_{M} der Kurve des Heizleistungssignals im ersten Zeitfenster ermittelt. Anschließend wird die über die Zeit aufgetragene Kurve des Heizleistungssignals auf das Vorliegen eines Werts x_{I} links vom globalen Maximum x_{M} und auf das Vorliegen eines Werts xᵣ rechts vom globalen Maximum x_{M} geprüft, welche Werte xₗ und xᵣ im vorgegebenen ersten Zeitfenster liegen und für die gilt x_{y} ≤ x_{M} - Δ₁, mit y = r,l und mit Δ₁ einer vorgegebenen Größe. Existieren die genannten Werte x_{y} ≤ x_{M} - Δ₁ mit y = r,l im ersten Zeitfenster, wird ein Tröpfchenniederschlag erkannt.

Gemäß einer Weiterbildung der Erfindung wird die Erkennung des Tröpfchenniederschlags signalisiert z.B. durch Ausgabe eines Signals, insbesondere eines Alarm-Signals. Alternativ wird das Durchflusssignal korrigiert oder als nicht vertrauenswürdig bzw. als fehlerbehaftet ausgegeben oder zur Berechnung des Durchflusses wird in einem Zeitfenster um den auftretenden Tröpfchenniederschlag das Signal nicht berücksichtigt.

Gemäß einer weiteren Weiterbildung des erfindungsgemäßen Verfahrens wird im Anschluss an die vorangegangenen Verfahrensschritte das erste Zeitfenster um ein vorgegebenes Maß nach rechts, also auf einen späteren Zeitpunkt, verschoben. Danach kann das Verfahren von neuem beginnen.

Das vorgegebene Maß beträgt dabei insbesondere exakt einen diskreten Wert. Eine typische Abtastrate für das erfindungsgemäße Verfahren beträgt zwischen 4 und 200 Hz.

Gemäß einer weiteren Weiterbildung der Erfindung beträgt die vorgegebene Länge des ersten Zeitfensters zwischen 1,5 und 20 Sekunden. Bei einer Abtastrate von 100 Hz zur Digitalisierung eines analogen Signals, hier des Maßes des Wärmeübergangs, ergibt sich somit eine Länge des ersten Zeitfensters von 150 bis 2000 diskreten Messwerten.

Weitergebildet beträgt das vorgegebene Δ₁ zwischen 0,005 und 0,06 Watt, falls als Maß für den Wärmeübertrag die Heizleistung zum Beheizen des beheizten Temperaturfühlers herangezogen wird.

Gleichzeitig oder zeitlich nachfolgend können gemäß einer Weiterbildung der Erfindung zusätzlich folgende Verfahrenschritte zur Erkennung eines Tröpfchenniederschlags an einem beheizten Temperaturfühler eines thermischen Durchflussmessgeräts zur Messung des Durchflusses eines Fluids ausgeführt werden:
Untersuchen eines Maßes für die vom beheizten Temperaturfühler auf das Fluid übertragene Wärme auf das Vorliegen einer Periodizität in einem vorgegebenen Intervall. Das Ergebnis dieser Untersuchung, also die Information ob eine Periodizität im vorgegebenen Intervall vorliegt, wird anschließend zur Erkennung des Tröpfchenniederschlags verwendet. Gegebenenfalls werden weitere Informationen ausgewertet, wie z.B. welche Periode die im vorgegebenen Intervall vorliegende Periodizität aufweist.

Gemäß einer weiteren Weiterbildung der Erfindung wird zur Erkennung eines Tröpfchenniederschlags an einem beheizten Temperaturfühler eines thermischen Durchflussmessgeräts die Heizleistung zum Beheizen des beheizten Temperaturfühlers auf das Vorliegen einer Periodizität in einem vorgegebenen Intervall untersucht und die vorliegende Periodizität im vorgegebenen Intervall zur Erkennung des Tröpfchenniederschlags verwendet. Das Vorliegen einer Periodizität in einem vorgegebenen Intervall bedeutet, dass die Periode, also die Zeitdauer zwischen zwei Ereignissen, bzw. die Frequenz der Ereignisse größer sind als ein vorgegebener Mindestwert und kleiner sind als ein vorgegebener Höchstwert, wobei Mindest- und Höchstwert die Grenzen des vorgegebenen Intervalls bilden.

Beispielsweise wird ein Heizleistungssignal über der Zeit aufgetragen. Das Signal wird auf Periodizitäten untersucht, beispielsweise mittels einer Fourier-Transformation, insbesondere einer Fast Fourier Transformation (FFT). Anschließend wird untersucht, ob die Periodendauern in einem Intervall vorgegebener Größe liegen, also ob eine Periodizität im vorgegebenen Intervall vorliegt. Ist dies der Fall, wird ein Tröpfchenniederschlag erkannt.

Generell kann zur Untersuchung des Maßes für den Wärmeübertrag vom beheizten Temperaturfühler auf das Fluid auf das Vorliegen einer Periodizität in einem vorgegebenen Intervall eine Fourier-Transformation des Maßes für den Wärmeübertrag verwendet werden.

Die genannte Fourier-Transformation ist nicht einzige Möglichkeit zur Untersuchung auf das Vorliegen einer Periodizität. Daneben gibt es beispielsweise noch die Autokorrelationsfunktion. Gemäß einer Weiterbildung der Erfindung werden zur Untersuchung des Maßes für den Wärmeübertrag vom beheizten Temperaturfühler auf das Fluid, insbesondere zur Untersuchung der Heizleistung zum Beheizen des beheizten Temperaturfühlers, auf das Vorliegen einer Periodizität folgende Verfahrensschritte durchgeführt:
Ermitteln des größten Werts des Maßes für den Wärmeübertrag in einem zweiten Zeitfenster vorgegebener Länge;
Prüfen der Werte des Maßes für den Wärmeübertrag im zweiten Zeitfenster auf das Vorliegen eines zweiten Werts des Maßes für den Wärmeübertrag nach dem ersten, größten Werts des Maßes für den Wärmeübertrag, welcher kleiner ist als die Differenz aus dem ersten, größten Wert und einem vorgegebenem Δ₂;
Speichern des Zeitpunkts des ersten, größten Werts des Maßes für den Wärmeübertrag bei Vorliegen des zweiten Werts des Maßes für den Wärmeübertrag;
Verschieben des zweiten Zeitfensters um ein vorgegebenes Maß auf einen späteren Zeitpunkt; Wiederholen der voranstehenden Verfahrensschritte;
Ermitteln der Abstände dreier aufeinander folgender abgespeicherter Zeitpunkte;
Prüfen eines Intervalls vorgegebener Größe auf Umfassen der jeweiligen zeitlichen Abstände.

So wird beispielsweise zunächst eine Kurve des Signals der Heizleistung zum Beheizen des beheizten Temperaturfühlers über die Zeit aufgetragen und das globale Maximum x_{M} der Kurve im zweiten Zeitfenster ermittelt. Nachfolgend wird geprüft, ob im zweiten Zeitfenster ein Wert xᵣ rechts des Maximums existiert, für den gilt: xᵣ ≤ x_{M} - Δ₁, mit einem Δ₁ vorgegebener Größe. Falls ein solcher Wert xᵣ existiert, wird zumindest der Zeitwert des Maximums in einem Speicher zur späteren Verwendung festgehalten. Danach wird das zweite Fenster um ein vorgegebenes Maß nach rechts verschoben und die in diesem Abschnitt genannten Verfahrensschritte wiederholt, bis zumindest drei Zeitwerte dreier globaler Maxima in drei zweiten Zeitfenstern gespeichert sind. Eine Verschiebung nach rechts bedeutet, dass das Fenster auf einen späteren Zeitpunkt verschoben wird. Analog befindet sich ein früherer Zeitpunkt links und ein späterer Zeitpunkt rechts vom ausgehenden Zeitpunkt.

Sind drei Zeitwerte gespeichert, werden ihre zeitlichen Abstände zueinander ermittelt. Entsprechen diese Abstände einer Periodendauer in einem Intervall vorgegebener Größe, liegen also die zwei ermittelten Abstände über einem unteren Grenzwert und unter einem oberen Grenzwert, wird das Vorliegen einer vorgegebenen Periodizität festgestellt und gegebenenfalls ausgegeben. Das Speichern von Zeitwerten erfolgt beispielsweise mittels eines Zeitstempels, welcher dem erfindungsgemäßen Ereignis einen Zeitpunkt zuordnet.

Gemäß einer weiteren Weiterbildung der Erfindung beträgt die vorgegebene Länge des zweiten Zeitfensters zwischen 1,5 und 20 Sekunden. Bei einer Abtastrate von 100 Hz zur Digitalisierung eines analogen Signals, hier des Maßes des Wärmeübergangs, ergibt sich somit eine Länge des ersten Zeitfensters von 150 bis 2000 diskreten Messwerten. Eine typische Abtastrate für das erfindungsgemäße Verfahren beträgt zwischen 4 und 200 Hz.

Weitergebildet beträgt das vorgegebene Δ₁ zwischen 0,005 und 0,06 Watt, falls als Maß für den Wärmeübertrag die Heizleistung zum Beheizen des beheizten Temperaturfühlers herangezogen wird.

Eine weitere Weiterbildung besteht darin, dass das zweite Zeitfenster um exakt einen diskreten Wert nach rechts verschoben wird. Natürlich können so in mehreren aufeinanderfolgenden ersten Zeitfenstern immer derselbe Zeitpunkt identifiziert werden, welcher erfindungsgemäß abgespeichert werden soll. Ausgewertet werden selbstverständlich nur Zeitpunkte mit einem Abstand größer Null zueinander

In einer weiteren Weiterbildung des erfindungsgemäßen Verfahrens wird der beheizte Temperaturfühler periodisch beheizt, wobei die Periodizität der Heizperioden kleiner ist, als die Periodizität im vorgegebenen Intervall zur Erkennung des Tröpfchenniederschlags. Die Periodizität der Heizperioden fällt somit nicht in das Intervall der Periodizität des Maßes für den Wärmeübertrag zur Erkennung des Tröpfchenniederschlags.

Das vorgegebene Intervall zur Erkennung des Tröpfchenniederschlags, welches auf Vorliegen der Periodizität des Maßes für den Wärmeübertrag geprüft wird, beträgt weiterbildungsgemäß 15 bis 3000 Sekunden bzw. eine entsprechende Anzahl diskreter Werte bei einer für die Erfindung typischen Abtastrate.

Natürlich können auch beide Tröpfchenarten zusammen auftreten, weshalb die Kombination beider beschriebenen Verfahrensteile zu einer Erhöhung der Entdeckungswahrscheinlichkeit eines Tröpfchenniederschlags führt. Die einzelnen Verfahrensschritte können dabei sequentiell nacheinander abfolgen oder gleichzeitig ausgeführt werden, insbesondere dann, wenn die Längen der jeweiligen Zeitfenster entsprechend gewählt werden, insbesondere wenn das erste und zweite Zeitfenster gleich lang ist.

Entsprechend einer Weiterbildung der Erfindung ist somit die Länge des ersten Zeitfensters gleich der Länge des zweiten Zeitfensters. Gemäß einer weiteren Weiterbildung der Erfindung ist Δ₁ gleich Δ₂.

Gleichzeitig oder zeitlich nachfolgend können gemäß einer Weiterbildung der Erfindung zusätzlich folgende Verfahrenschritte zur Erkennung eines Tröpfchenniederschlags an einem beheizten Temperaturfühler eines thermischen Durchflussmessgeräts zur Messung des Durchflusses eines Fluids ausgeführt werden:
Ermitteln des größten Werts eines Maßes für einen Wärmeübertrag vom beheizten Temperaturfühlers auf das Fluid in einem zweiten Zeitfenster vorgegebener Länge ermittelt;
Prüfen ob je ein Wert des Maßes für den Wärmeübertrag im zweiten Zeitfenster vor und nach dem größten Wert des Maßes für den Wärmeübertrag vorliegt, welcher kleiner ist als die Differenz aus größtem Wert und einem Δ₂ vorgegebener Größe. Das Ergebnis der Prüfung wird anschließend zur Erkennung des Tröpfchenniederschlags verwendet.

Die Erfindung lässt zahlreiche Ausführungsformen zu. Einige davon sollen hier kurz anhand der nachfolgenden Figuren näher erläutert werden. Gleiche Elemente sind in den Figuren mit gleichen Bezugszeichen versehen.
- Fig. 1: zeigt einen ersten Tröpfchenniederschlag an einem Temperaturfühler,
- Fig. 2: zeigt einen zweiten Tröpfchenniederschlag an einem Temperaturfühler,
- Fig. 3: zeigt eine erste Heizleistungskurve,
- Fig. 4: zeigt eine zweite Heizleistungskurve,
- Fig. 5: zeigt eine dritte Heizleistungskurve,
- Fig. 6: zeigt eine vierte Heizleistungskurve,
- Fig. 7: zeigt erfindungsgemäße thermische Durchflussmessgeräte in verschiedenen Einbausituationen.

Unter Tröpfchenniederschlag wird die Bildung von Tröpfchen auf einer Oberfläche des thermischen Durchflussmessgeräts bezeichnet, welche eine Grenzfläche zum Fluid bildet. Nachfolgend wird die Erfindung anhand der Heizleistung als Maß für den Wärmeübertrag näher erläutert. Dies soll stellvertretend für alle Maße für den Wärmeübertrag gelten.

Es sind verschiedene Arten von Tröpfchen zu unterscheiden, welche mit einem erfindungsgemäßen Verfahren erkannt werden können. Hier sollen nur einige ausgewählte Beispiele näher erläutert werden, ohne Anspruch auf Vollständigkeit zu erheben.

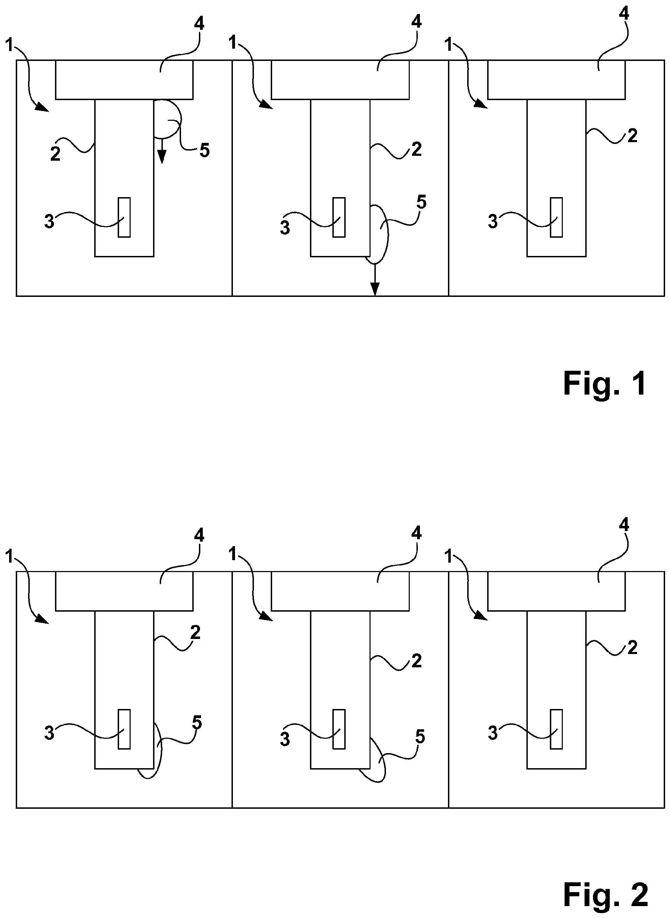

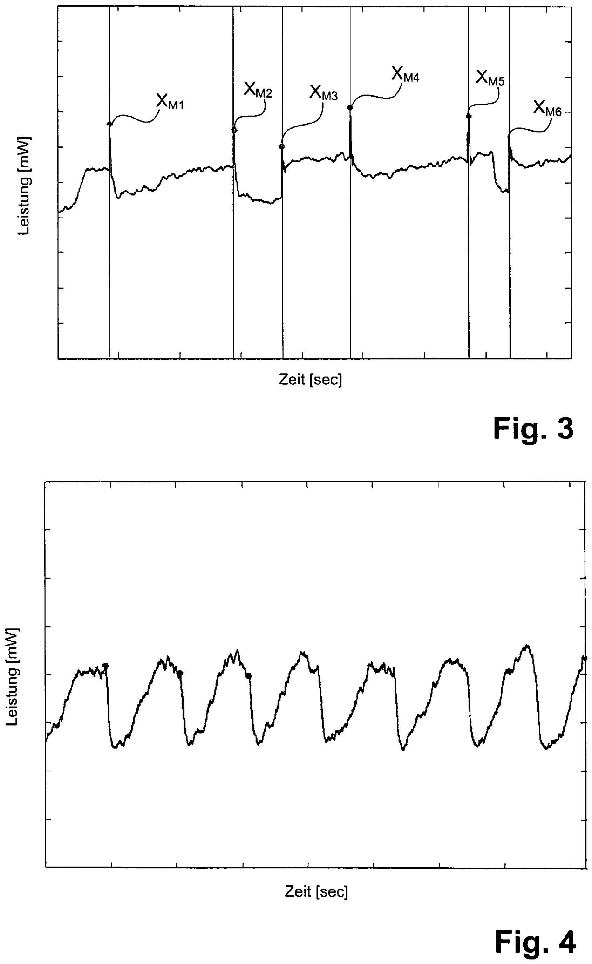

In Fig. 1 und Fig. 2 sind zwei Arten von Tröpfchen 5 in ihrer Entstehung zu einander nachfolgenden Zeitpunkten veranschaulicht. Fig. 3 und Fig. 4 zeigen die jeweils zugehörigen Signale einer Heizleistung zum Beheizen eines beheizten Temperaturfühlers 1 aufgetragen über die Zeit. Der beheizte Temperaturfühler 1 eines thermischen Durchflussmessgeräts umfasst hier eine stiftförmige Hülse 2 in welcher ein Widerstandsthermometer 3 angeordnet ist, welches beheizbar ausgestaltet ist. Das Widerstandsthermometer 3 ist im Bereich eines ersten Endes der stiftförmigen Hülse 2 angeordnet, ein zweites Ende der stiftförmigen Hülse 2 ist mit der Wand einer Rohrleitung 4 verbunden.

Ein Tröpfchen 5 entsteht beispielsweise an der Verbindungsstelle von Hülse 2 und Rohrleitung 4. Zunächst wird es durch die Oberflächenspannung an der Stelle gehalten. Das linke Bild von Fig. 1 zeigt dies. Durch das Wachstum des Tröpfchens steigt dessen Masse und zu einem späteren Zeitpunkt, welcher im mittleren Bild von Fig. 1 zu sehen ist, fließt das Tröpfchen 5 an der Hülse 2 entlang bis zum Bereich des Widerstandsthermometers 3 am ersten Ende der Hülse 2 und darüber hinaus, bis es sich von der Hülse 2 löst, wie im rechten Bild. Auf dem Weg am Widerstandsthermometer 3 vorbei, wird ein Betrag an Wärme vom Tröpfchen 5 absorbiert, was einen schlagartigen Anstieg der Heizleistung zu folge hat, wenn beispielsweise eine konstante Temperaturdifferenz zwischen dem beheizten und einem unbeheizten Temperaturfühler voreingestellt ist. Die Heizleistung nimmt anschließend wieder schlagartig ab, wenn das Tröpfchen 5 den Bereich des Widerstandsthermometers 3 wieder verlässt. Fig. 3 zeigt den zeitlichen Verlauf der Heizleistung beim Auftreten mehrerer Tröpfchen der beschriebenen Art. Die Tröpfchen verursachen jeweils einen Ausschlag in der Kurve des Heizleistungssignals über der Zeit, mit dem größten Wert X_{Mz}, mit z = 1, 2, 3, 4, 5, 6. Zu Detektieren sind diese Ausschläge erfindungsgemäß dadurch, dass der größte Wert einer Heizleistung zum Beheizen des beheizten Temperaturfühlers in einem ersten Zeitfenster vorgegebener Länge ermittelt wird, anschließend die Werte der Heizleistung im ersten Zeitfenster auf das Vorliegen je eines Werts rechts und links vom größten Wert Heizleistung, welche kleiner sind als die Differenz aus größtem Wert und einem vorgegebenem Δ₁ geprüft werden und anschließend das Ergebnis dieser Prüfung zur Erkennung des Tröpfchenniederschlags verwendet wird.

Eine andere Art des Tröpfchenniederschlags ist in Fig. 2 skizziert. Wie auch in Fig. 1 sind zeitlich einander nachfolgende Zustände in den Bildern von links nach rechts dargestellt. Das Tröpfchen 5 wächst im Bereich des ersten Endes der stiftförmigen Hülse 2, und erreicht im mittleren Bild der Fig. 2 eine kritische Masse, so dass es von der Hülse 2 abfällt, wie im rechten Bild. Durch das Wachstum im Bereich des beheizten Widerstandsthermometers 3 nimmt die Heizleistung nicht sprunghaft, sondern kontinuierlich zu, bis zu dem Zeitpunkt, in welchem sich das Tröpfchen 5 löst. Dort nimmt die Heizleistung wieder sprunghaft ab. Nun wurde beobachtet, dass sich dieses Tröpfchenwachstum periodisch wiederholt. In Fig. 4 ist der zeitliche Verlauf der Heizleistung zum beheizen des Temperaturfühlers aufgetragen, welcher durch einen solchen periodischen Tröpfchenniederschlag gekennzeichnet ist.

Erkannt wird dieser periodisch auftretende Tröpfchenniederschlag erfindungsgemäß durch die Untersuchung der Heizleistung zum Beheizen des beheizten Temperaturfühlers auf das Vorliegen einer Periodizität in einem vorgegebenen Intervall und Verwenden der vorliegenden Periodizität im vorgegebenen Intervall zur Erkennung des Tröpfchenniederschlags.

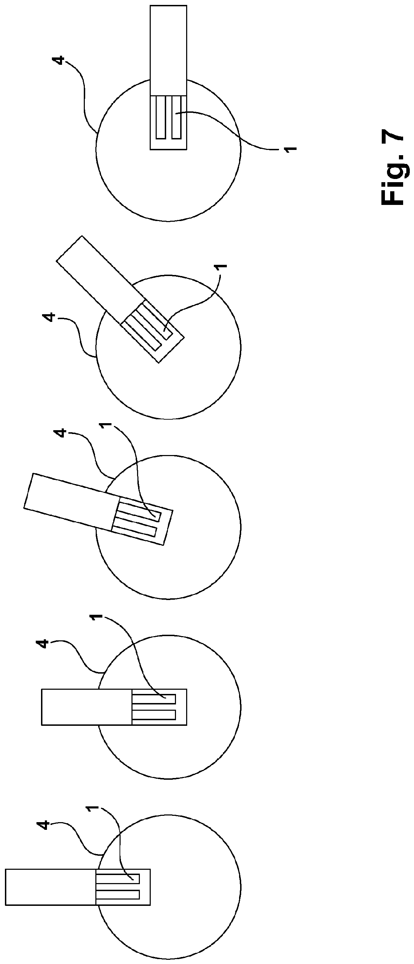

Welche Arten von Tröpfchen sich nun am Temperaturfühler niederschlagen unterliegt einer Reihe Einflussfaktoren. Einige davon sollen zur Fig. 7 näher erläutert werden.

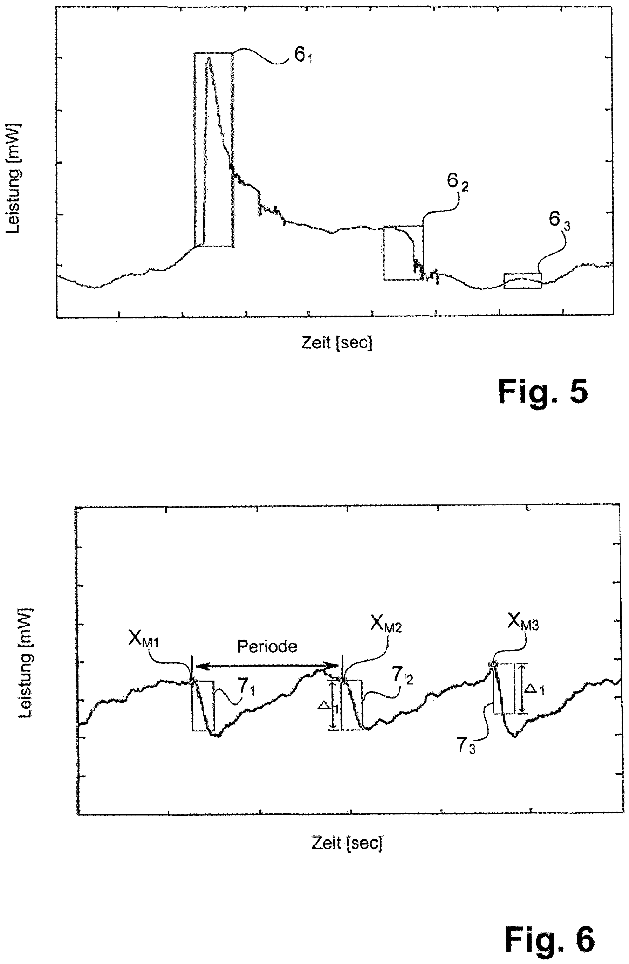

Fig. 5 skizziert den zeitlichen Verlauf eines Heizleistungssignals. Zusätzlich sind drei erste Zeitfenster 6₁, 6₂, und 6₃ eingezeichnet.

Im ersten Zeitfenster 6₁ ist das Kriterium zur Erkennung eines Tröpfchenniederschlags erfüllt, da innerhalb des ersten Zeitfensters 6₁ sowohl vor als auch nach dem höchsten Wert der Heizleistung im Zeitfenster ein Wert existiert, welcher kleiner ist als die Differenz aus dem höchsten Wert und einem vorgegebenen Δ₁.

In den ersten Zeitfenstern 6₂ und 6₃ ist dies hingegen nicht der Fall, da im ersten Zeitfenster 6₂ zwar ein solcher Wert rechts vom höchsten Wert im ersten Zeitfenster 6₂ existiert, jedoch nicht links davon. Im ersten Zeitfenster 6₃ unterschreitet keiner der Werte den Grenzwert gebildet aus der Differenz aus dem höchsten Wert und einem vorgegebenen Δ₁.

In Fig. 6 ist ein weiterer zeitlicher Verlauf der Heizleistung zu sehen. Drei Punkte X_{M1}, X_{M3} und X_{M3} bilden in ihren jeweiligen zweiten Zeitfenstern 7₁, 7₂ und 7₃ den ersten größten Wert der Heizleistung ab, für welche jeweils ein zweiter Wert der Heizleistung innerhalb des jeweiligen zweiten Zeitfensters existiert, welcher rechts vom größten Wert liegt und kleiner ist als die Differenz aus dem größten Wert und einem vorgegebenem Δ₂. Die Höhe der einbeschriebenen Zeitfenster entspricht dem vorgegebenem Δ₂. Der Abstand zwischen den ersten zwei Zeitwerten t₁ und t₂ der beiden größten Werte entspricht der Periodendauer, welche im vorgegebenen Intervall liegt. Da nun auch der Abstand zwischen dem zweiten und dritten gespeicherten Zeitwert t₂ und t₃ innerhalb dieses Intervalls liegt, wird das Vorliegen einer Periodizität erfindungsgemäß erkannt.

Der Tröpfchenniederschlag ist unter anderem zumindest abhängig von den Einbaubedingungen und Anströmbedingungen des thermischen Durchflussmessgeräts, insbesondere vom Winkel zur Erdoberfläche, von der Einragtiefe in das Messrohr und von der Strömungsgeschwindigkeit des Fluids in der Rohrleitung. Vor allem aber von der chemischen Zusammensetzung des Fluids und von dem Anteil an Tröpfchen in einer ansonsten gasförmigen Strömung. Daher sind unter anderem auch die vorgegebenen Fensterlängen und das jeweils vorgegebene Δ₁ bzw. Δ₂ davon abhängig. Fig. 7 zeigt nun mehrere Einbauvarianten eines thermischen Durchflussmessgeräts. Links ist ein thermisches Durchflussmessgerät mit einem beheizten und einem unbeheizten Temperaturfühler in einem Winkel von 0° in einer Rohrleitung angeordnet. Die Hülsen der beiden Temperaturfühler enden an der Wand der Rohrleitung. Im zweiten Bild von links enden die Hülsen der beiden Temperaturfühler im Fluid, d.h. sie ragen weiter in die Rohrleitung hinein. Die drei weiteren Bilder zeigen von links nach rechts drei weitere Einbausituationen. Die Temperaturfühler ragen zwar jeweils gleich weit in die Rohrleitung hinein, ihr Winkel verändert sich von links nach rechts jedoch von 15° über 45° zu 90°.

Allgemein werden die vorgegebene Länge des ersten und/oder des zweiten Zeitfensters und/oder der Betrag des vorgegebenen Δ₁ bzw. Δ₂ in Abhängigkeit von der Einbaulage des beheizten Temperaturfühlers des thermischen Durchflussmessgeräts und/oder von dessen konstruktiver Ausgestaltung, insbesondere dessen mediumsberührender Oberfläche und/oder von der Strömungsgeschwindigkeit des Fluids gewählt. Daneben sind entscheidend die Einbaulage, die zum beheizen aufgewandte Heizleistung, der gewählte Temperaturunterschied zwischen beheiztem und unbeheiztem Temperaturfühler und die chemische Zusammensetzung sowie der thermodynamische Zustand, wie Druck im und die Temperatur des Fluids selbst.

### Bezugszeichenliste

- 1: Temperaturfühler
- 2: Hülse
- 3: Widerstandsthermometer
- 4: Rohrleitung
- 5: Tröpfchen
- 6: Erstes Zeitfenster
- 7: Zweites Zeitfenster

## Patentansprüche

1. Verfahren zur Erkennung eines Tröpfchenniederschlags an einem beheizten Temperaturfühler eines thermischen Durchflussmessgeräts zur Messung des Durchflusses eines Fluids,
**gekennzeichnet durch folgende Verfahrensschritte:**
Ermitteln des größten Werts eines Maßes für einen Wärmeübertrag vom beheizten Temperaturfühler auf das Fluid in einem ersten Zeitfenster vorgegebener Länge;
Prüfen der Werte des Maßes für den Wärmeübertrag im ersten Zeitfenster auf das Vorliegen je eines Werts des Maßes für den Wärmeübertrag vor und nach dem größten Wert des Maßes für den Wärmeübertrag welche kleiner sind als die Differenz aus größtem Wert und einem vorgegebenem Δ₁;
Verwenden des Ergebnisses der Prüfung zur Erkennung des Tröpfchenniederschlags.

2. Verfahren nach Anspruch 1,
**gekennzeichnet durch folgende Verfahrensschritte:**
Ermitteln des größten Werts einer Heizleistung zum Beheizen des beheizten Temperaturfühlers im ersten Zeitfenster vorgegebener Länge;
Prüfen der Werte der Heizleistung im ersten Zeitfenster auf das Vorliegen je eines Werts der Heizleistung vor und nach dem größten Wert der Heizleistung welche kleiner sind als die Differenz aus größtem Wert und einem vorgegebenem Δ₁;
Verwenden des Ergebnisses der Prüfung zur Erkennung des Tröpfchenniederschlags.

3. Verfahren nach einem der Ansprüche 1 oder 2,
**dadurch gekennzeichnet,**
**dass** bei Vorliegen je eines Werts vor und nach dem größten Wert des Maßes für den Wärmeübertrag, insbesondere der Heizleistung, im ersten Zeitfenster, welche kleiner sind als die Differenz aus größtem Wert und vorgegebenem Δ, die Erkennung des Tröpfchenniederschlags signalisiert wird.

4. Verfahren nach einem der Ansprüche 1 bis 3,
**dadurch gekennzeichnet,**
**dass** nach der Prüfung das erste Zeitfenster um ein vorgegebenes Maß auf einen späteren Zeitpunkt verschoben wird.

5. Verfahren nach einem der Ansprüche 1 bis 4,
**dadurch gekennzeichnet,**
**dass** die vorgegebene Länge des ersten Zeitfensters zwischen 1,5 und 20 Sekunden beträgt.

6. Verfahren nach Anspruch 2,
**dadurch gekennzeichnet,**
**dass** das vorgegebene Δ₁ zwischen 0,005 und 0,06 Watt beträgt.

7. Verfahren nach einem der Ansprüche 1 bis 6,
**dadurch gekennzeichnet,**
**dass** der beheizte Temperaturfühler des thermischen Durchflussmessgeräts in einer gasförmigen Strömung mit einer relativen Feuchte von zumindest 80% verwendet wird.

8. Verfahren zur Erkennung eines Tröpfchenniederschlags an einem beheizten Temperaturfühler eines thermischen Durchflussmessgeräts zur Messung des Durchflusses eines Fluids nach einem der Ansprüche 1 bis 7,
**gekennzeichnet durch folgende Verfahrensschritte:**
Untersuchen eines Maßes für einen Wärmeübertrag vom beheizten Temperaturfühler auf das Fluid auf das Vorliegen einer Periodizität in einem vorgegebenen Intervall und Verwenden der vorliegenden Periodizität im vorgegebenen Intervall zur Erkennung des Tröpfchenniederschlags.

9. Verfahren nach Anspruch 8,
**gekennzeichnet durch folgende Verfahrensschritte:**
Untersuchen einer Heizleistung zum Beheizen des beheizten Temperaturfühlers auf das Vorliegen einer Periodizität in einem vorgegebenen Intervall und Verwenden der vorliegenden Periodizität im vorgegebenen Intervall zur Erkennung des Tröpfchenniederschlags.

10. Verfahren nach einem der Ansprüche 8 oder 9,
**dadurch gekennzeichnet,**
**dass** bei Vorliegen einer Periodizität im vorgegebenen Intervall die Erkennung des Tröpfchenniederschlags signalisiert wird.

11. Verfahren nach einem der Ansprüche 8 bis 10,
**dadurch gekennzeichnet,**
**dass** zur Untersuchung der Heizleistung zum Beheizen des beheizten Temperaturfühlers auf das Vorliegen einer Periodizität in einem vorgegebenen Intervall eine Fourier-Transformation der Heizleistung zum Beheizen des beheizten Temperaturfühlers durchgeführt wird.

12. Verfahren nach einem der Ansprüche 8 bis 11,
**dadurch gekennzeichnet,**
**dass** zur Untersuchung der Heizleistung zum Beheizen des beheizten Temperaturfühlers auf das Vorliegen einer Periodizität folgende Verfahrensschritte durchgeführt werden:
Ermitteln eines ersten, größten Werts der Heizleistung in einem zweiten Zeitfenster vorgegebener Länge,
Prüfen der Werte der Heizleistung im zweiten Zeitfenster auf das Vorliegen eines zweiten Werts der Heizleistung nach dem ersten, größten Werts der Heizleistung, welcher kleiner ist als die Differenz aus dem ersten, größten Wert und einem vorgegebenem Δ₂;
Speichern des Zeitpunkts des ersten, größten Werts der Heizleistung bei Vorliegen des zweiten Werts der Heizleistung;
Verschieben des zweiten Zeitfensters um ein vorgegebenes Maß auf einen späteren Zeitpunkt;
Wiederholen der voranstehenden Verfahrensschritte;
Ermitteln der Abstände dreier aufeinander folgender abgespeicherter Zeitpunkte;
Prüfen eines Intervalls vorgegebener Größe auf Umfassen der jeweiligen zeitlichen Abstände.

13. Verfahren nach Anspruch 12,
**dadurch gekennzeichnet,**
**dass** die vorgegebene Länge des zweiten Zeitfensters zwischen 1,5 und 20 Sekunden beträgt.

14. Verfahren nach einem der Ansprüche 12 oder 13,
**dadurch gekennzeichnet,**
**dass** das vorgegebene Δ₂ zwischen 0,005 und 0,06 Watt beträgt.

15. Verfahren nach Anspruch 1 und 12,
**dadurch gekennzeichnet,**
**dass** das erste Zeitfenster und das zweite Zeitfenster gleich lang sind.

16. Verfahren nach Anspruch 1 und 12,
**dadurch gekennzeichnet,**
**dass** das vorgegebene Δ₁ und das vorgegebene Δ₂ gleich groß sind.

## Claims

1. Procedure for detecting a droplet of condensation on a heated temperature sensor of a thermal flowmeter designed to measure the flow of a fluid,
**characterized by the following procedure steps:**
Determination of the largest value of a measure for a transfer of heat from the heated temperature sensor to the fluid in a first time window of a predefined length;
Checking of the values of the measure for the transfer of heat in the first time window for values of the measure for the transfer of heat before and after the largest value of the measure for the transfer of heat that are smaller than the difference between the largest value and a predefined value Δ₁;
Use of the result of the check to detect the droplet of condensation.

2. Procedure as claimed in Claim 1,
**characterized by the following procedure steps:**
Determination of the largest value of a heating power for heating the heated temperature sensor in the first time window of a predefined length;
Checking of the values of the heating power in the first time window for values of the heating power before and after the largest value of the heating power that are smaller than the difference between the largest value and a predefined value Δ₁;
Use of the result of the verification to detect the droplet of condensation.

3. Procedure as claimed in one of the Claims 1 or 2,
**characterized in that**
the detection of the droplet of condensation is signaled if values before and after the largest value of the measure for the transfer of heat, particularly the heating power, are found in the first time window that are smaller than the difference between the largest value and the predefined value Δ.

4. Procedure as claimed in one of the Claims 1 to 3,
**characterized in that**
after the check the first time window is shifted to a later time by a predefined value.

5. Procedure as claimed in one of the Claims 1 to 4,
**characterized in that**
the predefined length of the first time window is between 1.5 and 20 seconds.

6. Procedure as claimed in Claim 2,
**characterized in that**
the predefined value Δ₁ is between 0.005 and 0.06 watt.

7. Procedure as claimed in one of the Claims 1 to 6,
**characterized in that**
the heated temperature sensor of the thermal flowmeter is used in a gaseous flow with a relative humidity of at least 80 %.

8. Procedure for the detection of a droplet of condensation on a heated temperature sensor of a thermal flowmeter designed to measure the flow of a fluid as claimed in one of the Claims 1 to 7,
**characterized by the following procedure steps:**
Analysis of a measure for a transfer of heat from the heated temperature sensor to the fluid to check for the presence of a periodicity in a predefined interval and use of the periodicity present in the defined interval to detect the droplet of condensation.

9. Procedure as claimed in Claim 8,
**characterized by the following procedure steps:**
Analysis of a heating power for heating the heated temperature sensor to check for the presence of a periodicity in a predefined interval and use of the periodicity present in the defined interval to detect the droplet of condensation.

10. Procedure as claimed in one of the Claims 8 or 9,
**characterized in that**
the detection of the droplet of condensation is signaled if a periodicity is present in the predefined interval.

11. Procedure as claimed in one of the Claims 8 to 10,
**characterized in that**
a Fourier transform is performed on the heating power for heating the heated temperature sensor in order to analyze the heating power for heating the heated temperature sensor for the presence of a periodicity in a predefined interval.

12. Procedure as claimed in one of the Claims 8 to 11,
**characterized in that**
the following steps are performed to analyze the heating power for heating the heated temperature sensor for the presence of a periodicity:
Determination of a first largest value of the heating power in a second time window of a predefined length,
Checking of the values of the heating power in the second time window for the presence of a second value of the heating power after the first largest value of the heating power, said second value being smaller than the difference between the first largest value and a predefined value Δ2;
Saving of the time of the first largest value of the heating power if the second value of the heating power is present;
Shifting of the second time window by a predefined value to a later time;
Repetition of the previous process steps;
Determination of the periods of time between three saved, consecutive times;
Checking of an interval of a predefined size to determine whether it includes the specific periods of time.

13. Procedure as claimed in Claim 12,
**characterized in that**
the predefined length of the second time window is between 1.5 and 20 seconds.

14. Procedure as claimed in one of the Claims 12 or 13,
**characterized in that**
the predefined value Δ₂ is between 0.005 and 0.06 watt.

15. Procedure as claimed in Claim 1 and 12,
**characterized in that**
the first time window and the second time window are identical in length.

16. Procedure as claimed in Claim 1 and 12,
**characterized in that**
the predefined value Δ₁ and the predefined value Δ₂ are equal.

## Revendications

1. Procédé destiné à la détection de gouttelettes de condensation sur un capteur de température chauffé d'un débitmètre thermique destiné à la mesure du débit d'un fluide,
**caractérisé par les étapes de procédé suivantes** :
Détermination de la valeur la plus élevée d'une mesure pour un transfert de chaleur du capteur de température au fluide dans une première fenêtre temporelle de longueur prédéfinie ;
Vérification des valeurs de la mesure pour le transfert de chaleur dans la première fenêtre temporelle par rapport à la présence d'une valeur de la mesure pour le transfert de chaleur respectivement avant et après la valeur la plus élevée de la mesure pour le transfert de chaleur, lesquelles valeurs sont inférieures à la différence entre la valeur la plus élevée et une valeur Δ₁ prédéfinie ;
Utilisation du résultat de la vérification en vue de la détection des gouttelettes de condensation.

2. Procédé selon la revendication 1,
**caractérisé par les étapes de procédé suivantes** :
Détermination de la valeur la plus élevée d'une puissance de chauffage destinée au chauffage du capteur de température chauffé dans la première fenêtre temporelle de longueur prédéfinie ;
Vérification des valeurs de la puissance de chauffage dans la première fenêtre temporelle par rapport à la présence d'une valeur de la puissance de chauffage respectivement avant et après la valeur la plus élevée de la puissance de chauffage, lesquelles valeurs sont inférieures à la différence entre la valeur la plus élevée et une valeur Δ₁ prédéfinie ;
Utilisation du résultat de la vérification en vue de la détection des gouttelettes de condensation.

3. Procédé selon l'une des revendications 1 ou 2,
**caractérisé**
**en ce que** la détection des gouttelettes de condensation est signalée si une valeur est présente à la fois avant et après la plus grande valeur de la mesure pour le transfert de chaleur, notamment la puissance de chauffage, dans la première fenêtre temporelle, lesquelles valeurs sont inférieures à la différence entre la valeur la plus élevée et la valeur Δ prédéfinie.

4. Procédé selon l'une des revendications 1 à 3,
**caractérisé**
**en ce que**, après la vérification, la première fenêtre temporelle est décalée d'une valeur prédéfinie à un moment ultérieur dans le temps.

5. Procédé selon l'une des revendications 1 à 4,
**caractérisé**
**en ce que** la longueur prédéfinie de la première fenêtre temporelle est comprise entre 1,5 et 20 secondes.

6. Procédé selon la revendication 2,
**caractérisé**
**en ce que** la valeur Δ₁ prédéfinie est comprise entre 0,005 et 0,06 watt.

7. Procédé selon l'une des revendications 1 à 6,
**caractérisé**
**en ce que** le capteur de température chauffé du débitmètre thermique est utilisé dans un écoulement gazeux avec une humidité relative d'au moins 80 %.

8. Procédé destiné à la détection de gouttelettes de condensation sur un capteur de température chauffé d'un débitmètre thermique destiné à la mesure du débit d'un fluide selon l'une des revendications 1 à 7,
**caractérisé par les étapes de procédé suivantes** :
Analyse d'une mesure pour un transfert de chaleur du capteur de température chauffé au fluide par rapport à la présence d'une périodicité dans un intervalle prédéfini et utilisation de la périodicité présente dans l'intervalle prédéfini en vue de la détection des gouttelettes de condensation.

9. Procédé selon la revendication 8,
**caractérisé par les étapes de procédé suivantes** :
Analyse d'une puissance de chauffage destinée au chauffage du capteur de température chauffé par rapport à la présence d'une périodicité dans un intervalle prédéfini et utilisation de la périodicité présente dans l'intervalle prédéfini en vue de la détection des gouttelettes de condensation.

10. Procédé selon l'une des revendications 8 ou 9,
**caractérisé**
**en ce que** la détection de gouttelettes de condensation est signalée en présence d'une périodicité dans l'intervalle prédéfini.

11. Procédé selon l'une des revendications 8 à 10,
**caractérisé**
**en ce que**, pour l'analyse de la puissance de chauffage destinée au chauffage du capteur de température chauffé par rapport à la présence d'une périodicité dans un intervalle prédéfini, une transformation de Fourier de la puissance de chauffage destinée au chauffage du capteur de température chauffé est effectuée.

12. Procédé selon l'une des revendications 8 à 11,
**caractérisé**
**en ce que**, pour l'analyse de la puissance de chauffage destinée au chauffage du capteur de température chauffé par rapport à la présence d'une périodicité, les étapes de procédé suivantes sont exécutées :
Détermination d'une première valeur la plus élevée de la puissance de chauffage dans une deuxième fenêtre temporelle de longueur prédéfinie,
Vérification des valeurs de la puissance de chauffage dans la deuxième fenêtre temporelle par rapport à la présence d'une deuxième valeur de la puissance de chauffage après la première valeur la plus élevée de la puissance de chauffage, laquelle deuxième valeur est inférieure à la différence entre la première valeur la plus élevée et une valeur Δ₂ prédéfinie ;
Mémorisation de l'instant de la première valeur la plus élevée de la puissance de chauffage lorsque la deuxième valeur de la puissance de chauffage est présente ; Décalage à un instant ultérieur de la deuxième fenêtre temporelle d'une valeur prédéfinie ;
Répétition des étapes de procédé précédentes ;
Détermination des intervalles de trois instants consécutifs mémorisés ;
Vérification d'un intervalle de taille prédéfinie par rapport à l'inclusion des intervalles de temps respectifs.

13. Procédé selon la revendication 12,
**caractérisé**
**en ce que** la longueur prédéfinie de la deuxième fenêtre temporelle est comprise entre 1,5 et 20 secondes.

14. Procédé selon l'une des revendications 12 ou 13,
**caractérisé**
**en ce que** la valeur Δ₂ prédéfinie est comprise entre 0,005 et 0,06 watt.

15. Procédé selon la revendication 1 et 12,
**caractérisé**
**en ce que** la première fenêtre temporelle et la deuxième fenêtre temporelle sont identiques.

16. Procédé selon la revendication 1 et 12,
**caractérisé**
**en ce que** la valeur prédéfinie Δ₁ et la valeur prédéfinie Δ₂ sont égales.
